# EUROPEAN PATENT SPECIFICATION

(11) **EP 2 692 993 B1**
(45) Date of publication and mention of the grant of the patent: **10.07.2019**
(21) Application number: 12765692.4
(22) Date of filing: 06.03.2012
(51) Int. Cl.: F01D 9/02, F01D 11/08, F01D 25/12, F02C 7/18, F02C 7/28, F01D 5/14, F01D 9/04

(54) **GAS TURBINE**
GASTURBINE
TURBINE À GAZ

(30) Priority: 30.03.2011 JP 2011076830
(43) Date of publication of application: 05.02.2014
(73) Proprietor: Mitsubishi Heavy Industries, Ltd., Tokyo 108-8215 (JP)
(72) Inventor: SAKAMOTO, Yasuro, Tokyo 108-8215 (JP); ITO, Eisaku, Tokyo 108-8215 (JP)
(74) Representative: Henkel, Breuer & Partner
(86) International application number: PCT/JP2012/055677
(87) International publication number: WO 2012/132787

(56) References cited:
- EP-A2- 2 003 292
- JP-A- 10 184 304
- JP-A- 59 153 903
- JP-A- 2001 221 065
- JP-A- 2008 138 666
- JP-A- 2008 138 667
- US-A- 4 317 646
- US-A1- 2005 106 025

## Description

### Field

The present invention relates to a gas turbine that is rotated by combustion gas and to an outer shroud.

### Background

Heretofore, a gas turbine has been known that is provided with an axis of rotation, turbine blades extending radially outwardly with respect to the axis of rotation, seal segments, each one of which provided spaced radially outwardly from each of the turbine blades, and stator assemblies that is adjacent to the seal segment (see e.g. JP 7-233735A). Each stator assembly and each seal segment are located spaced from one another and a cavity that circumferentially extends is formed between the stator assembly and the seal segment. The cavity forms a cooling air flow path.

EP2003292 A2 discloses a gas turbine which has, in a component facing a tip-end of the shroud of a turbine blade a recess and an upstream edge of the recess seems to be provided with a slightly rounded surface. The document does not seem to be concerned with the cooling of the ring segment and does not describe any details of the ring segment at all.

### Summary

### Technical Problem

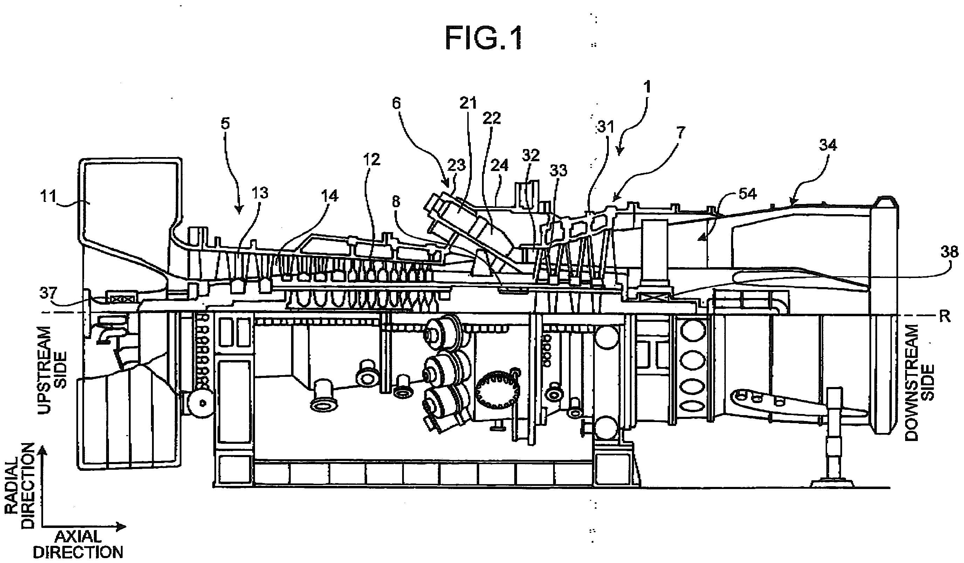

In the structure of a conventional gas turbine, it has been preferable that the inner circumferential surface of an outer shroud that defines a flow-path of a working fluid in the stator assembly positioned on the upstream side of the flow direction of the working fluid (FIG. 1, left) and a sealing surface of the seal segment positioned on the downstream side (FIG. 1, center) are formed such that heights thereof in a radial direction are flush with each other. However, in consideration of pressure loss in the flow direction of the working fluid, and thermal elongation, dimension tolerance, or the like of the seal segment, the sealing surface of the seal segment can be positioned slightly radially outwardly with respect to the inner circumferential surface of the outer shroud. In other words, an inner diameter of the seal segment can be larger as compared to an inner diameter of the outer shroud in the stator assembly.

In this case, a stepped portion is formed between the inner circumferential surface of the outer shroud and the sealing surface of the seal segment. However, when the stepped portion is formed, the working fluid flowing in the outer shroud and the seal segment forms vortexes on the downstream side of the stepped portion, and is prone to be mixed with seal gas supplied from the cavity. If the working fluid and the seal gas are mixed together, a temperature of the seal gas increases, which might lead to increase a heat load on the seal segment.

An object of the present invention is therefore to provide a gas turbine and an outer shroud capable of suppressing an increase in a heat load on ring segments (seal segments).

### Solution to Problem

According to the present invention there is provided a gas turbine as defined in claim 1 and an outer shroud as defined in claim 8. Preferred embodiments of the gas turbine and of the shroud are defined in the dependent claims.

According to this configuration, the combustion gas flowing in the combustion gas flow-path in the outer shroud can be guided by the guide surface toward the inner circumferential surface of the ring segment. At this time, since the flow passage area of the combustion gas flow-path is formed to be gradually increased, it is possible to inhibit mixing of the combustion gas with the seal gas fed between the ring segment and the outer shroud, and to guide the seal gas along the inner circumferential surface of the ring segment. This allows cooling of the ring segment by seal gas, thereby suppressing an increase in a heat load on the ring segment.

In this case, it is preferable that a downstream end portion of the guide surface is positioned radially outwardly with respect to an inner circumferential surface of the outer shroud on an upstream side of the guide surface.

According to this configuration, since the guide surface is extended radially outwardly when moving in the downstream direction, it is possible that the combustion gas is guided toward the inner circumferential surface of the ring segment, while being diffused radially outwardly toward the downstream side. This allows the suppression of a pressure loss in the combustion gas flowing from the outer shroud into the ring segment.

In this case, it is preferable that an upstream end portion of the inner circumferential surface of the ring segment is positioned radially outwardly with respect to a tangent on the downstream end portion of the guide surface.

According to this configuration, the combustion gas guided by the guide surface can preferably be guided toward the inner circumferential surface of the ring segment.

In this case, it is preferable that the guide surface is formed by notching the inner circumference of the outer shroud on the downstream side.

According to this configuration, the guide surface can readily be formed by notching the inner circumference of the outer shroud.

In this case, it is preferable that the guide surface is formed at a projecting portion provided by projecting with respect to the inner circumference of the outer shroud on the downstream side.

According to this configuration, the guide surface can be formed by providing the projecting portion on the inner circumference of the outer shroud.

In this case, it is preferable that the guide surface is formed at a curved surface.

According to this configuration, since the combustion gas can be guided along the guide surface that is a curved surface, it is possible to facilitate passage of the combustion gas, thereby reducing a heat load on the guide surface.

In this case, it is preferable that an angle of the tangent on the downstream end portion of the guide surface with respect to an axial direction of the turbine shaft is ranged from 10° or larger to 30° or smaller.

According to this configuration, the combustion gas flowing along the guide surface can preferably be guided toward the inner circumferential surface of the ring segment.

### Advantageous Effects of Invention

According to the gas turbine and the outer shroud of the present invention, by providing a guide surface on an inner circumference of an outer shroud on the downstream side of a gas flow direction, mixing of combustion gas with seal gas is inhibited, thereby suppressing an increase in a heat load on a ring segment.

### Brief Description of Drawings

FIG. 1 is a schematic configuration view of a gas turbine according to the first embodiment.
FIG. 2 is a partial sectional view around a turbine of the gas turbine according to the first embodiment.
FIG. 3 is a schematic view around a first turbine blade of the gas turbine according to the first embodiment.
FIG. 4 is a graph comparing the amount of heat input around a first ring segment of the gas turbine according to the first embodiment to the amount of heat input around the first ring segment of a conventional gas turbine.
FIG. 5 is a schematic view around a first turbine blade of a gas turbine according to the second embodiment. Description of Embodiments

Hereinafter, a gas turbine according to the present invention will be described with reference to the accompanying drawings. It should be noted that the present invention is not limited to the below described embodiments. Further, constituent elements in the embodiments below include those that can be replaced and easily made by persons skilled in the art, or that are substantially equivalent.

### First Embodiment

As illustrated in FIG. 1, a gas turbine 1 of the first embodiment is constituted of a compressor 5, a combustor 6, and a turbine 7. Further, a turbine shaft 8 is disposed to pass through the center portion of the compressor 5, the combustor 6, and the turbine 7. The compressor 5, the combustor 6, and the turbine 7 are arranged in a row and in this order from the upstream side to the downstream side of a gas flow direction of air or combustion gas along an axial center R of the turbine shaft 8.

The compressor 5 compresses air, so that the air is turned into compressed air. The compressor 5 is provided with a compressor casing 12 having an air inlet port 11 for taking air therein, the compressor casing 12, in which a plurality of stages of compressor vanes 13 and a plurality of stages of compressor blades 14 are arranged. The compressor vane 13 of each one of the plurality of stages is mounted to the compressor casing 12, and circumferentially arranged in a row in a plurality of places. The compressor blade 14 of each one of the plurality of stages is mounted to the turbine shaft 8, and circumferentially arranged in a row in a plurality of places. The plurality of stages of compressor vanes 13 and the plurality of stages of the compressor blades 14 are alternately arranged along the axial direction.

The combustor 6 supplies fuel to compressed air compressed by the compressor 5, so that high-temperature and high-pressure combustion gas is generated. The combustor 6 has an inner cylinder 21 that serves as a combustion chamber for mixing and burning the compressed air and the fuel, a transition piece 22 for introducing the combustion gas from the inner cylinder 21 to the turbine 7, and an external cylinder 23 for covering the outer circumference of the inner cylinder 21 and introducing the compressed air from the compressor 5 to the inner cylinder 21. The combustor 6 is arranged in a row in a plurality of places circumferentially with respect to a combustor casing 24.

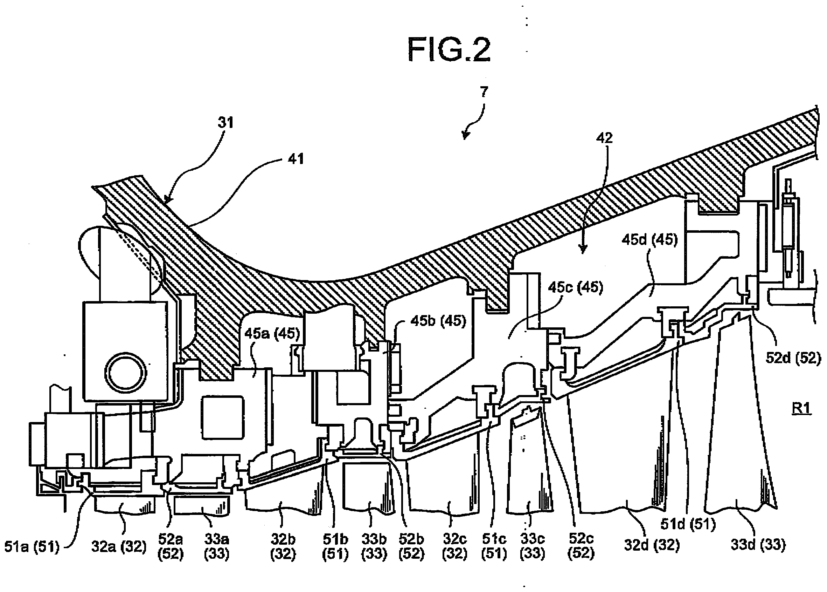

The turbine 7 generates rotational power using the combustion gas burned in the combustor 6. The turbine 7 has a turbine casing 31 that defines an outer shell, and in the turbine casing 31, a plurality of stages of turbine vanes 32, and a plurality of stages of turbine blades 33 are provided. The turbine vane 32 of each one of the plurality of stages is mounted to the turbine casing 31, and circumferentially arranged in a row in a plurality of places. The turbine blade 33 of each one of the plurality of stages is secured to the outer circumference of a discus-like disk centered on the axial center R of the turbine shaft 8, and circumferentially arranged in a row in a plurality of places. The plurality of stages of turbine vanes 32 and the plurality of stages of turbine blades 33 are alternately arranged in a plurality of places along the axial direction. The turbine 7 will now be specifically described with reference to FIG. 2.

As illustrated in FIG. 2, the turbine casing 31 has an outer casing 41 and an inner casing 42. In addition, on the downstream side of the turbine casing 31, there is provided a flue gas chamber 34 that has a diffuser 54 therein, the diffuser 54 communicating with the turbine 7 (see FIG. 1). The inner casing 42 has a plurality of diaphragms 45 axially arranged in a row. The plurality of diaphragms 45 includes a first diaphragm 45a, a second diaphragm 45b, a third diaphragm 45c, and a fourth diaphragm 45d in this order from the upstream side of the gas flow direction (axial direction). The plurality of diaphragms 45 is disposed radially inwardly of the outer casing 41.

The inner casing 42 is provided with a plurality of outer shrouds 51 and a plurality of ring segments 52. The plurality of outer shrouds 51 includes a first outer shroud 51a, a second outer shroud 51b, a third outer shroud 51c, and a fourth outer shroud 51d in this order from the upstream side of the gas flow direction. Further, the plurality of ring segments 52 includes a first ring segment 52a, a second ring segment 52b, a third ring segment 52c, and a fourth ring segment 52d in this order from the upstream side of the gas flow direction.

The plurality of outer shrouds 51 and the plurality of ring segments 52 are provided such that the first outer shroud 51a, the first ring segment 52a, the second outer shroud 51b, the second ring segment 52b, the third outer shroud 51c, the third ring segment 52c, the fourth outer shroud 51d, and the fourth ring segment 52d are arranged in this order from the upstream side of the gas flow direction, and such that each one of the outer shrouds and the ring segments are axially oppositely disposed.

The first outer shroud 51a and the first ring segment 52a are mounted radially inwardly of the first diaphragm 45a. Similarly, the second outer shroud 51b and the second ring segment 52b are mounted on radially inwardly of the second diaphragm 45b, the third outer shroud 51c and the third ring segment 52c are mounted on radially inwardly of the third diaphragm 45c, and the fourth outer shroud 51d and the fourth ring segment 52d are mounted radially inwardly of the fourth diaphragm 45d.

An annular flow-path formed between the inner circumferential side of the plurality of outer shrouds 51 and of the plurality of the ring segments 52, and the outer circumferential side of the turbine shaft 8 constitutes a combustion gas flow-path R1. The combustion gas flows along the combustion gas flow-path R1.

The plurality of stages of turbine vanes 32 is disposed in accordance with each of the plurality of outer shrouds 51, and is provided radially inwardly of the plurality of outer shrouds 51. The turbine vane 32 of each one of the plurality of stages is provided to be integral with each outer shroud 51, and constitutes a stationary side. The plurality of stages of turbine vanes 32 includes a first turbine vane 32a, a second turbine vane 32b, a third turbine vane 32c, and a fourth turbine vane 32d in this order from the upstream side of the gas flow direction. The first turbine vane 32a is provided radially inwardly of the first outer shroud 51a. Similarly, the second turbine vane 32b, the third turbine vane 32c, and the fourth turbine vane 32d are provided radially inwardly of the second outer shroud 51b, the third outer shroud 51c, and the fourth outer shroud 51d, respectively.

The plurality of stages of turbine blades 33 is disposed in accordance with each of the plurality of ring segments 52, and is provided radially inwardly of the plurality of ring segments 52. The turbine blade 33 of each one of the plurality of stages is provided spaced with respect to each ring segment 52, and constitutes a movable side. The plurality of stages of turbine blades 33 includes a first turbine blade 33a, a second turbine blade 33b, a third turbine blade 33c, and a fourth turbine blade 33d in this order from the upstream side of the gas flow direction. Further, the first turbine blade 33a is provided radially inwardly of the first ring segment 52a. Similarly, the second turbine blade 33b, the third turbine blade 33c, and the fourth turbine blade 33d are provided radially inwardly of the second ring segment 52b, the third ring segment 52c, and the fourth ring segment 52d, respectively.

With this arrangement, the plurality of stages of turbine vanes 32 and the plurality of stages of turbine blades 33 are provided such that the first turbine vane 32a, the first turbine blade 33a, the second turbine vane 32b, the second turbine blade 33b, the third turbine vane 32c, the third turbine blade 33c, the fourth turbine vane 32d, and the fourth turbine blade 33d are arranged in this order from the upstream side of the gas flow direction, and such that each one of the turbine vanes and the turbine blades are axially oppositely disposed.

The turbine shaft 8 is provided rotatably about the axial center R by having one end portion thereof near the compressor 5 supported by a bearing 37, and having another end portion thereof near the flue gas chamber 34 supported by a bearing 38. Further, a drive shaft of a power generator (not illustrated) is coupled to the end portion of the turbine shaft 8 near the flue gas chamber 34.

In the gas turbine 1 as described above, when the turbine shaft 8 is rotated, air is taken in from the air inlet port 11 of the compressor 5. Then, the air taken in passes through the plurality of stages of compressor vanes 13 and the plurality of stages of compressor blades 14, and is compressed to be high-temperature and high-pressure compressed air. The combustor 6 supplies fuel to this compressed air to generate high-temperature and high-pressure combustion gas. This combustion gas passes through the plurality of stages of turbine vanes 32 and the plurality of stages of turbine blades 33 in the turbine 7, and rotationally drives the turbine shaft 8. Accordingly, the power generator coupled to the turbine shaft 8 is provided with rotational power, and generates electric power. Subsequently, the combustion gas after rotationally driving the turbine shaft 8 is converted to static pressure in the diffuser 54 in the flue gas chamber 34, and then is discharged to the air.

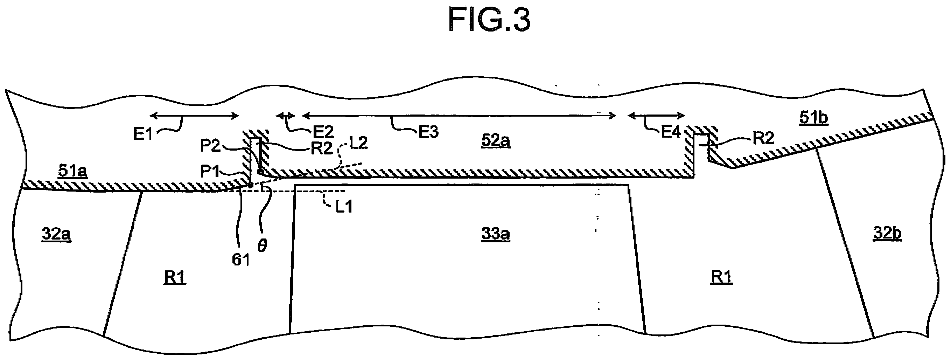

Next, the configuration around the first turbine blade 33a of the turbine 7 will be described with reference to FIG. 3. FIG. 3 is a schematic view around the first turbine blade of the gas turbine according to the first embodiment. Between each one of the outer -shrouds 51 and the each one of the ring segments 52, a cavity R2 is individually provided. The cavity R2 is provided over the circumferential direction. Seal gas such as air, of which temperature is lower than that of the combustion gas, is supplied from the cavity R2 toward the combustion gas flow-path R1.

As illustrated in FIG. 3, in consideration of the pressure loss in the gas flow direction of the combustion gas, and the thermal elongation, dimension tolerance, or the like of the ring segment 52, the inner diameter of the first ring segment 52a is slightly larger as compared to the inner diameter of the first outer shroud 51a. The configuration around the cavity R2 located between the first outer shroud 51a and the first ring segment 52a will now be described.

The first outer shroud 51a has a guide surface 61 that is formed on the inner circumferential surface on the downstream side. The guide surface 61 is formed by notching the inner circumferential surface of the first outer shroud 51a on the downstream side, and is formed such that the combustion gas flowing along the guide surface 61 is directed to the inner circumferential surface of the first ring segment 52a. The combustion gas flow-path R1 on the guide surface 61 of the first outer shroud 51a is thus formed such that the flow passage area thereof is gradually increased.

The guide surface 61 is an inclined surface having a linear form in cross section and being inclined radially outwardly from the upstream side to the downstream side of the gas flow direction. A downstream end portion P1 of the guide surface 61 is positioned radially outwardly with respect to an extended line L1 of the inner circumferential surface of the first outer shroud 51a on the upstream side of the guide surface 61. The extending direction of the extended line L1 is the same direction as the axial direction of the turbine shaft 8. In addition, the angle θ formed between the extended line L1 that is the same direction as the axial direction of the turbine shaft and the tangent L2 on the downstream end portion P1 of the guide surface 61 is ranged from 10° or larger to 30° or smaller. Further, an upstream end portion P2 on the inner circumferential surface of the first ring segment 52a is positioned radially outwardly with respect to the tangent L2.

Therefore, when the combustion gas flowing along the inner circumferential surface of the first outer shroud 51a reaches the guide surface 61, the combustion gas flows along the guide surface 61. Accordingly, a portion of the combustion gas spreads and flows radially outwardly, and flows toward the inner circumferential surface of the first ring segment 52a. On the other hand, the seal gas supplied from the cavity R2 that is located between the first outer shroud 51a and the first ring segment 52a flows toward the combustion gas flow-path R1. The seal gas flown into the combustion gas flow-path R1 is introduced by the flow of the combustion gas, thereby flowing toward the inner circumferential surface of the first ring segment 52a. Accordingly, the seal gas flows along the inner circumferential surface of the first ring segment 52a without being mixed with the combustion gas, and the combustion gas flows along the seal gas that flows along the inner circumferential surface of the first ring segment 52a. In other words, the seal gas that flows along the inner circumferential surface of the first ring segment 52a and the combustion gas that flows along the seal gas flow in layers.

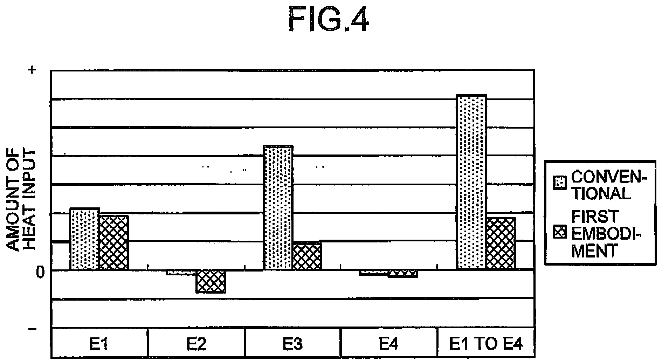

Next, with reference to FIG. 4, the amount of heat input around the first ring segment of the gas turbine according to the first embodiment and the amount of heat input around the first ring segment of a conventional gas turbine will be compared. FIG. 4 is a graph comparing the amount of heat input around the first ring segment of the gas turbine according to the first embodiment to the amount of heat input around the first ring segment of the conventional gas turbine. In the graph illustrated in FIG. 4, the vertical axis thereof indicates amounts of heat input, and the amounts of heat input are the results of the analysis performed in a plurality of areas.

As illustrated in FIG. 3, the plurality of areas includes a first area E1, a second area E2, a third area E3, and a fourth area E4 in this order from the upstream side of the gas flow direction. The first area E1 is an area on the inner circumferential surface of the first outer shroud 51a on the downstream side of the first turbine vane 32a. The second area E2 is an area on the inner circumferential surface of the first ring segment 52a on the upstream side of the first turbine blade 33a. The third area E3 is an area on the inner circumferential surface of the first ring segment 52a where the first turbine blade 33a is located. The fourth area E4 is an area on the inner circumferential surface of the first ring segment 52a on the downstream side of the first turbine blade 33a.

It should be noted that a comparative conventional configuration is a configuration, in which the guide surface 61 formed by notching is not provided. That is, in the conventional first outer shroud 51a, the inner circumferential surface thereof is plane over the surface from the upstream side to the downstream side of the gas flow direction.

Here, the amount of heat input in the first area E1 is slightly reduced as compared to the conventional configuration by an amount of the guide surface 61 formed. As regards the amount of heat input in the second area E2, by forming the guide surface 61, mixing of the seal gas supplied from the cavity R2 with the combustion gas is inhibited, thereby improving heat-removal effects as compared to the conventional configuration. The amount of heat input in the third area E3 is considerably reduced as compared to the conventional configuration because mixing of the seal gas with the combustion gas is inhibited, and the seal gas and the combustion gas flow in layers. As regards the amount of heat input in the fourth area E4, no remarkable difference is observed between the configuration of the first embodiment and the conventional configuration. Further, it has been determined that total amount of heat input in the first area E1 to the fourth area E4 in the configuration of the first embodiment can be reduced as compared to the conventional configuration, and that a heat load on the first ring segment 52a can be suppressed.

As described above, according to the configuration of the first embodiment, in the first outer shroud 51a, the combustion gas flowing in the combustion gas flow-path R1 can be guided by the guide surface 61 toward the inner circumferential surface of the first ring segment 52a. At this time, since the guide surface 61 is formed such that the flow passage area of the combustion gas flow-path R1 is gradually increased, it is possible to inhibit mixing of the combustion gas with the seal gas supplied from the cavity R2, and to guide the seal gas along the inner circumferential surface of the first ring segment 52a. Accordingly, mixing of the combustion gas with the seal gas is inhibited, and the first ring segment 52a can be cooled by the seal gas, of which temperature is lower than that of the combustion gas, thereby suppressing an increase in a heat load on the first ring segment 52a.

Further, according to the configuration of the first embodiment, since the angle θ of the tangent L2 with respect to the extended line L1 can be ranged from 10° or larger to 30° or smaller, it is possible to preferably guide the combustion gas flowing along the guide surface 61 toward the inner circumferential surface of the first ring segment 52a.

It should be noted that although the guide surface 61 is provided on the inner circumferential surface of the first outer shroud 51a in the first embodiment, it is not limited thereto, and the guide surface 61 may be provided on the inner circumferential surface of other one of the outer shrouds 51.

Also, although the guide surface 61 is an inclined surface having a linear form in cross section in the first embodiment, it is not limited thereto, and the guide surface 61 may be a curved surface having a curved form in cross section. According to this configuration, since the combustion gas can be guided along the guide surface that is a curved surface, it is possible to facilitate passage of combustion gas, and to reduce a heat load on the guide surface 61.

### Second Embodiment

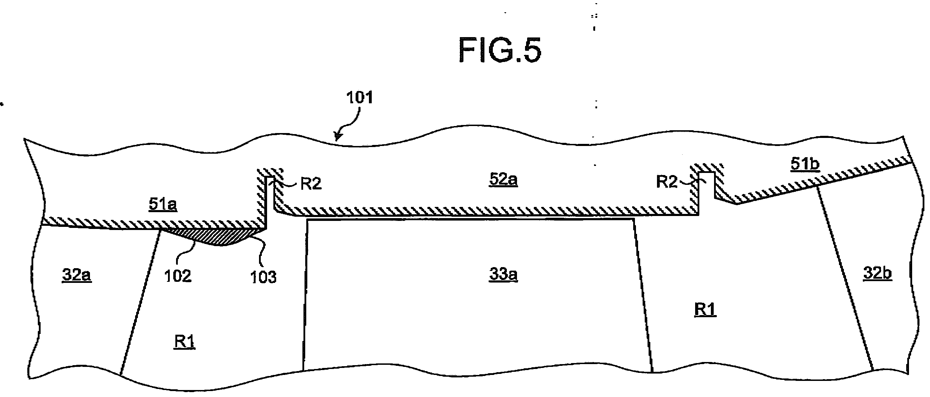

Next, a gas turbine according to a second embodiment will be described with reference to FIG. 5. FIG. 5 is a schematic view around the first turbine blade of a gas turbine according to the second embodiment. In the second embodiment, in order to avoid redundant description, only different parts will be described. In the gas turbine 1 of the first embodiment, the guide surface 61 is formed by notching the inner circumferential surface of the first outer shroud 51a. However, in a gas turbine 101 of the second embodiment, a guide surface 103 is formed by providing a projecting portion 102 on the inner circumferential surface of the first outer shroud 51a. The projecting portion 102 that is provided on the inner circumferential surface of the first outer shroud 51a will now be described with reference to FIG. 5.

The projecting portion 102 is provided on the inner circumferential surface of the first outer shroud 51a on the downstream side of the first turbine vane 32a. The projecting portion 102 is formed to be a curved surface projecting radially inwardly therefrom. On a portion of the upstream side thereof, there is formed an inclined surface having a linear form in cross section or a curved form in cross section inclining in a radially inward direction, and on a portion of the downstream side thereof, there is formed the guide surface 103 having a linear form in cross section or a curved form in cross section inclining in a radially outward direction.

Consequently, when the combustion gas flowing along the inner circumferential surface of the first outer shroud 51a reaches the guide surface 103 of the projecting portion 102, the combustion gas flows along the guide surface 103. Accordingly, a portion of the combustion gas spreads and flows radially outwardly, and flows toward the inner circumferential surface of the first ring segment 52a. On the other hand, the seal gas supplied from the cavity R2 that is located between the first outer shroud 51a and the first ring segment 52a flows toward the combustion gas flow-path R1. The seal gas flown into the combustion gas flow-path R1 is introduced by the flow of the combustion gas, thereby flowing toward the inner circumferential surface of the first ring segment 52a. Accordingly, mixing of the seal gas with the combustion gas is inhibited, and the seal gas flows along the inner circumferential surface of the first ring segment 52a. The combustion gas flows along the seal gas that flows along the inner circumferential surface of the first ring segment 52a. In other words, the seal gas that flows along the inner circumferential surface of the first ring segment 52a and the combustion gas that flows along the seal gas flow in layers.

As described above, also in the configuration of the second embodiment, in the first outer shroud 51a, the combustion gas flowing in the combustion gas flow-path R1 can be guided by the guide surface 103 toward the inner circumferential surface of the first ring segment 52a. At this time, since the guide surface 103 is formed such that the flow passage area of the combustion gas flow-path R1 is gradually increased, it is possible to inhibit mixing of the combustion gas with the seal gas supplied from the cavity R2, and to guide the seal gas along the inner circumferential surface of the first ring segment 52a. Accordingly, mixing of the combustion gas with the seal gas is inhibited, and the first ring segment 52a can be cooled by the seal gas, of which temperature is lower than that of the combustion gas, thereby suppressing an increase in a heat load on the first ring segment 52a.

### Reference Signs List

- 1: GAS TURBINE
- 5: COMPRESSOR
- 6: COMBUSTOR
- 7: TURBINE
- 8: TURBINE SHAFT
- 11: AIR-INLET PORT
- 12: COMPRESSOR CASING
- 13: COMPRESSOR VANE
- 14: COMPRESSOR BLADE
- 21: INNER CYLINDER
- 22: TRANSITION PIECE
- 23: EXTERNAL CYLINDER
- 24: COMBUSTOR CASING
- 31: TURBINE CASING
- 32: TURBINE VANE
- 33: TURBINE BLADE
- 41: OUTER CASING
- 42: INNER CASING
- 45: DIAPHRAGM
- 51: OUTER SHROUD
- 52: RING SEGMENT
- 61: GUIDE SURFACE
- 101: GAS TURBINE (SECOND EMBODIMENT)
- 102: PROJECTING PORTION
- 103: GUIDE SURFACE (SECOND EMBODIMENT)
- R1: COMBUSTION GAS FLOW-PATH
- R2: CAVITY

## Claims

1. A gas turbine (1;101) comprising:
a turbine blade (33) mounted to a rotatable turbine shaft (8);
a turbine vane (32) secured so as to be axially opposite with respect to the turbine blade (33);
an inner casing (42) provided with an outer shroud (51) and with a ring segment (52), wherein the ring segment (52) circumferentially surrounds the turbine blade (33), and the outer shroud (51) circumferentially surrounds the turbine vane (32), the outer shroud (51) being provided so as to be axially opposite with respect to the ring segment (52); and
a combustion gas flow-path (R1) provided in the ring segment (52) and the outer shroud (51), for passing combustion gas, wherein
the outer shroud (51) is positioned on an upstream side of the ring segment (52) in a gas flow direction of the combustion gas,
a cavity (R2) is located between the outer shroud (51) and the ring segment (52), wherein seal gas having a temperature lower than a temperature of the combustion gas is adapted to be fed from the cavity (R2) into the combustion gas flow-path (R1),
the outer shroud (51) has a guide surface (61;103) that is provided on an inner circumference thereof on a downstream side of the gas flow direction, the guide surface (61;103) arranged to guide the combustion gas passing therein toward an inner circumferential surface of the ring segment (52), and
the guide surface (61;103) is formed such that a flow passage area of the combustion gas flow-path (R1) is gradually increased.

2. The gas turbine (1) according to claim 1, wherein a downstream end portion (P1) of the guide surface (61) is positioned radially outwardly with respect to an inner circumferential surface of the outer shroud (51) on an upstream side of the guide surface (61).

3. The gas turbine (1) according to claim 2, wherein an upstream end portion (P2) of the inner circumferential surface of the ring segment (52) is positioned radially outwardly with respect to a tangent (L2) on the downstream end portion (P1) of the guide surface (61).

4. The gas turbine (1) according to claim 3, wherein an angle of the tangent (L2) on the downstream end portion of the guide surface (61) with respect to an axial direction of the turbine shaft (8) is ranged from 10° or larger to 30° or smaller.

5. The gas turbine (1) according to any one of claims 1 to 4, wherein the guide surface (61) is formed by notching the inner circumference of the outer shroud (51) on the downstream side.

6. The gas turbine (101) according to any one of claims 1 to 4, wherein the guide surface (103) is formed at a projecting portion (102) provided by projecting with respect to the inner circumference of the outer shroud (51) on the downstream side.

7. The gas turbine (1;101) according to any one of claims 1 to 6, wherein the guide surface (61;103) is formed at a curved surface.

8. An outer shroud (51) for circumferentially surrounding a turbine vane (32), wherein the outer shroud (51) is arranged to be provided to an inner casing (42) so as to be axially opposite with respect to a ring segment (52) arranged to be provided to the inner casing (42), and the turbine vane (32) is secured so as to be opposite with respect to a turbine blade (33) in an axial direction of a rotatable turbine shaft (8), the outer shroud (51) comprising:
a combustion gas flow-path (R1) provided in the ring segment (52) and the outer shroud (51), for passing combustion gas, wherein
seal gas having a temperature lower than a temperature of the combustion gas is adapted to be fed from a cavity (R2) provided between the ring segment (52) and the outer shroud (51) into the combustion gas flow-path (R1),
the outer shroud (51) has a guide surface (61) that is provided on an inner circumference thereof on a downstream side of the gas flow direction, the guide surface (61) arranged to guide the combustion gas passing therein toward an inner circumferential surface of the ring segment (52), and
the guide surface (61) is formed such that a flow passage area of the combustion gas flow-path (R1) is gradually increased.

9. The outer shroud (51) according to claim 8, further comprising:
an inner circumferential surface provided upstream of the guide surface (61), wherein a downstream end portion (P1) of the guide surface (61) is positioned radially outwardly with respect to the inner circumferential surface.

10. The outer shroud (51) according to claim 9, wherein a tangent (L2) on the downstream end portion (P1) of the guide surface (61) is positioned radially inwardly an upstream end portion (P2) of an inner circumferential surface of the ring segment (52).

11. The outer shroud (51) according to claim 10, wherein an angle of the tangent (L2) on the downstream end portion (P1) of the guide surface (61) with respect to an axial direction of the turbine shaft (8) is ranged from 10° or larger to 30° or smaller.

12. The outer shroud (51) according to any one of claims 8 to 11, wherein the guide surface (61) is formed by notching the inner circumference of the outer shroud (51) on the downstream side.

13. The outer shroud (51) according to any one of claims 8 to 11, wherein the guide surface (103) is formed at a projecting portion (102) provided by projecting with respect to the inner circumference of the outer shroud (51) on the downstream side.

14. The outer shroud (51) according to any one of claims 8 to 13, wherein the guide surface (61;103) is formed at a curved surface.

## Patentansprüche

1. Eine Gasturbine (1;101) mit:
einer Turbinenschaufel (33), die an einer drehbaren Turbinenwelle (8) angebracht ist,
einem Turbinenflügel (32), der so festgelegt ist, dass er sich axial gegenüber bezüglich der Turbinenschaufel (33) befindet,
einem inneren Gehäuse (42), das mit einem äußeren Deckring (51) und mit einem Ringsegment (52) versehen ist, wobei das Ringsegment (52) die Turbinenschaufel (33) am Umfang umgibt, und der äußere Deckring (51) den Turbinenflügel (32) am Umfang umgibt, wobei der äußere Deckring (51) so vorgesehen ist, dass er sich axial gegenüber bezüglich dem Ringsegment (52) befindet,
einem Verbrennungsgasströmungsweg (R1), der in dem Ringsegment (52) und dem äußeren Deckring (51) vorgesehen ist, um Verbrennungsgas passieren zu lassen, wobei
der äußere Deckring (51) an einer stromaufwärtigen Seite des Ringsegments (52) in einer Gasströmungsrichtung des Verbrennungsgases positioniert ist,
ein Hohlraum (R2) zwischen dem äußeren Deckring (51) und dem Ringsegment (52) angeordnet ist, wobei Dichtungsgas mit einer niedrigeren Temperatur als eine Temperatur des Verbrennungsgases von dem Hohlraum (R2) in den Verbrennungsgasströmungsweg (R1) zugeführt werden kann,
der äußere Deckring (51) eine Leitoberfläche (61;103) besitzt, die an einem inneren Umfang davon an einer stromabwärtigen Seite der Gasströmungsrichtung vorgesehen ist, wobei die Leitoberfläche (61;103) angeordnet ist, um das darin passierende Verbrennungsgas zu einer Innenumfangsoberfläche des Ringsegments (52) zu leiten, und
die Leitoberfläche (61;103) so ausgebildet ist, dass ein Strömungsdurchgangsbereich des Verbrennungsgasströmungswegs (R1) allmählich zunimmt.

2. Die Gasturbine (1) gemäß Anspruch 1, wobei ein stromabwärtiger Endabschnitt (P1) der Leitoberfläche (61) radial auswärts bezüglich einer Innenumfangsoberfläche des äußeren Deckrings (51) an einer stromaufwärtigen Seite der Leitoberfläche (61) positioniert ist.

3. Die Gasturbine (1) gemäß Anspruch 2, wobei ein stromaufwärtiger Endabschnitt (P2) der Innenumfangsoberfläche des Ringsegments (52) radial auswärts bezüglich einer Tangente (L2) an dem stromabwärtigen Endabschnitt (P1) der Leitoberfläche (61) positioniert ist.

4. Die Gasturbine (1) gemäß Anspruch 3, wobei ein Winkel der Tangente (L2) an dem stromabwärtigen Endabschnitt der Leitoberfläche (61) bezüglich einer Axialrichtung der Turbinenwelle (8) in einem Bereich von 10° oder größer bis 30° oder kleiner ist.

5. Die Gasturbine (1) gemäß einem der Ansprüche 1 bis 4, wobei die Leitoberfläche (61) durch Einkerben des Innenumfangs des äußeren Deckrings (51) an der stromabwärtigen Seite gebildet ist.

6. Die Gasturbine (101) gemäß einem der Ansprüche 1 bis 4, wobei die Leitoberfläche (103) an einem Vorsprungabschnitt (102) ausgebildet ist, der durch Vorstehen bezüglich dem Innenumfang des äußeren Deckrings (51) an der stromabwärtigen Seite vorgesehen ist.

7. Die Gasturbine (1;101) gemäß einem der Ansprüche 1 bis 6, wobei die Leitoberfläche (61;103) an einer gekrümmten Oberfläche ausgebildet ist.

8. Ein äußerer Deckring (51) zum umfangsmäßigem Umgeben eines Turbinenflügels (32), wobei der äußere Deckring (51) angeordnet ist, um an einem inneren Gehäuse (42) so vorgesehen zu werden, dass er sich axial gegenüber bezüglich einem Ringsegment (52) befindet, das angeordnet ist, um an dem inneren Gehäuse (42) vorgesehen zu werden, und der Turbinenflügel (32) so festgelegt ist, dass es sich gegenüber bezüglich einer Turbinenschaufel (33) in einer Axialrichtung einer drehbaren Turbinenwelle (8) befindet, wobei der äußere Deckring (51) aufweist:
einen Verbrennungsgasströmungsweg (R1), der in dem Ringsegment (52) und dem äußeren Deckring (51) vorgesehen ist, um Verbrennungsgas passieren zu lassen, wobei
Dichtungsgas mit einer Temperatur, die niedriger ist als eine Temperatur des Verbrennungsgases, von einem Hohlraum (R2), der zwischen dem Ringsegment (52) und dem äußeren Deckring (51) vorgesehen ist, in den Verbrennungsgasströmungsweg (R1) zugeführt werden kann,
der äußere Deckring (51) eine Leitoberfläche (61) besitzt, die an einem Innenumfang davon an einer stromabwärtigen Seite der Gasströmungsrichtung vorgesehen ist, wobei die Leitoberfläche (61) angeordnet ist, um das darin passierende Verbrennungsgas zu einer Innenumfangsoberfläche des Ringsegments (52) zu leiten, und
die Leitoberfläche (61) so ausgebildet ist, dass ein Strömungsdurchgangsbereich des Verbrennungsgasströmungswegs (R1) allmählich zunimmt.

9. Der äußere Deckring (51) gemäß Anspruch 8, ferner mit: einer Innenumfangsoberfläche, die stromauf der Leitoberfläche (61) vorgesehen ist, wobei ein stromabwärtiger Endabschnitt (P1) der Leitoberfläche (61) radial auswärts bezüglich der Innenumfangsoberfläche positioniert ist.

10. Der äußere Deckring (51) gemäß Anspruch 9, wobei eine Tangente (L2) an dem stromabwärtigem Endabschnitt (P1) der Leitoberfläche (61) radial einwärts eines stromaufwärtigen Endabschnitts (P2) einer Innenumfangsoberfläche des Ringsegments (52) positioniert ist.

11. Der äußere Deckring (51) gemäß Anspruch 10, wobei ein Winkel der Tangente (L2) an dem stromäbwärtigen Endabschnitt (P1) der Leitoberfläche (61) bezüglich einer Axialrichtung der Turbinenwelle (8) im Bereich von 10° oder größer bis 30° oder kleiner liegt.

12. Der äußere Deckring (51) gemäß einem der Ansprüche 8 bis 11, wobei die Leitoberfläche (61) durch Einkerben des Innenumfangs des äüßeren Deckrings (51) an der stromabwärtigen Seite gebildet ist.

13. Der äußere Deckring (51) gemäß einem der Ansprüche 8 bis 11, wobei die Leitoberfläche (103) an einem Vorsprungsabschnitt (102) ausgebildet ist, der durch Vorstehen bezüglich dem Innenumfang des äußeren Deckrings (51) an der stromabwärtigen Seite vorgesehen ist.

14. Der äußere Deckring (51) gemäß einem der Ansprüche 8 bis 13, wobei die Leitoberfläche (61;103) an einer gekrümmten Oberfläche ausgebildet ist.

## Revendications

1. Turbine (1 ; 101) à gaz, comprenant :
une aube (33) mobile de turbine, montée sur un arbre (8) tournant de turbine ;
une aube (32) directrice de turbine, fixée de manière à être opposée axialement à l'aube (33) mobile de la turbine ;
une enveloppe (42) intérieure, pourvue d'une virole (51) extérieure et d'un segment (52) annulaire, le segment (52) annulaire entourant circonférentiellement l'aube (33) mobile de la turbine et la virole (51) extérieure entourant circonférentiellement l'aube (32) directrice de la turbine, la virole (51) extérieure étant prévue de manière à être opposée axialement au segment (52) annulaire et
un trajet (R1) de passage des gaz de combustion, prévu dans le segment (52) annulaire et dans la virole (51) extérieure pour faire passer des gaz de combustion, dans laquelle
la virole (51) extérieure est placée d'un côté en amont du segment (52) annulaire dans un sens de passage des gaz de combustion,
une cavité (R2) est placée entre la virole (51) extérieure et le segment (52) annulaire, du gaz d'étanchéité, ayant une température plus basse qu'une température des gaz de combustion, étant conçu pour être envoyé de la cavité (R2) au trajet (R1) de passage des gaz de combustion,
la virole (51) extérieure a une surface (61 ; 103) de conduite, qui est prévue sur sa circonférence intérieure d'un côté en aval du sens de passage des gaz, la surface (61 ; 103) de conduite étant agencée pour conduire les gaz de combustion y passant vers une surface circonférentielle intérieure du segment (52) annulaire et
la surface (61 ; 103) de conduite est formée de manière à ce qu'une surface de passage du trajet (R1) de passage des gaz de combustion soit augmentée graduellement.

2. Turbine (1) à gaz suivant la revendication 1, dans laquelle une partie (P1) d'extrémité d'aval de la surface (61) de conduite est placée vers l'extérieur radialement d'une surface circonférentielle intérieure de la virole (51) extérieure d'un côté en amont de la surface (61) de conduite.

3. Turbine (1) à gaz suivant la revendication 2, dans laquelle une partie (P2) d'extrémité d'amont de la surface circonférentielle intérieure du segment (52) annulaire est placée vers l'extérieur radialement d'une tangente (L2) à une partie (P1) d'extrémité d'aval de la surface (61) de conduite.

4. Turbine (1) à gaz suivant la revendication 3, dans laquelle un angle de la tangente (L2) à la partie d'extrémité d'aval de la surface (61) de conduite avec une direction axiale de l'arbre (8) de la turbine va de 10° ou plus à 30° ou moins.

5. Turbine (1) à gaz suivant l'une quelconque des revendications 1 à 4, dans laquelle la surface (61) de conduite est formée en entaillant la circonférence intérieure de la virole (51) extérieure du côté en aval.

6. Turbine (1) à gaz suivant l'une quelconque des revendications 1 à 4, dans laquelle la surface (103) de conduite est formée à une partie (102) en saillie, prévue en faisant une saillie par rapport à la surface intérieure de la virole (51) extérieure du côté en aval.

7. Turbine (1) à gaz suivant l'une quelconque des revendications 1 à 6, dans laquelle la surface (61 ; 103) de conduite est formée sur une surface incurvée.

8. Virole (51) extérieure pour entourer circonférentiellement une aube (32) directrice de turbine, la virole (51) extérieure étant agencée pour être prévue sur une enveloppe (42) intérieure, de manière à être opposée axialement à un segment (52) annulaire agencé pour être prévu sur l'enveloppe (42) intérieure, et l'aube (32) directrice de la turbine est fixée de manière à être opposée à une aube (33) mobile de la turbine, dans une direction axiale d'un arbre (8) tournant de la turbine, la virole (51) extérieure comprenant :
un trajet (R1) de passage des gaz de combustion, prévu dans le segment (52) annulaire et dans la virole (51) extérieure pour faire passer des gaz de combustion, dans laquelle
du gaz d'étanchéité, ayant une température plus basse que la température du gaz de combustion, est conçu pour être envoyé d'une cavité (R2) prévue entre le segment (52) annulaire et la virole (51) extérieure dans le trajet (R1) de passage de gaz de combustion,
la virole (51) extérieure a une surface (61) de conduite, qui est prévue sur sa circonférence intérieure d'un côté en aval du sens de passage des gaz, la surface (61) de conduite étant agencée pour conduire les gaz de combustion y passant vers une surface circonférentielle intérieure du segment (52) annulaire et
une surface (61) de conduite est formée de manière à ce qu'une surface de passage du trajet (R1) de passage des gaz de combustion soit augmentée graduellement.

9. Virole (51) extérieure suivant la revendication 8, comprenant, en outre :
une surface circonférentielle intérieure, prévue en amont de la surface (61) de conduite, une partie (P1) d'extrémité d'aval de la surface (61) de conduite étant placée radialement vers l'extérieur par rapport à la surface circonférentielle intérieure.

10. Virole (51) extérieure suivant la revendication 9, dans laquelle une tangente (L2), à la partie (P1) d'extrémité d'aval de la surface (61) de conduite, est placée radialement vers l'intérieur d'une partie (P2) d'extrémité d'amont d'une surface circonférentielle intérieure du segment (52) annulaire.

11. Virole (51) extérieure suivant la revendication 10, dans laquelle un angle de la tangente (L2), à la partie (P1) d'extrémité d'aval de la surface (61) de conduite, avec une direction axiale de l'arbre (8) de la turbine va de 10° ou plus à 30° ou moins.

12. Virole (51) extérieure suivant l'une quelconque des revendications 8 à 11, dans laquelle la surface (61) de conduite est formée en entaillant la circonférence intérieure de la virole (51) extérieure du côté en aval.

13. Virole (51) extérieure suivant l'une quelconque des revendications 8 à 11, dans laquelle la surface (103) de conduite est formée à une partie (102) en saillie, prévue en faisant une saillie par rapport à la surface intérieure de la virole (51) extérieure du côté en aval.

14. Virole (51) extérieure suivant l'une quelconque des revendications 8 à 13, dans laquelle la surface (61 ; 103) de conduite est formée sur une surface incurvée.
